# EUROPEAN PATENT APPLICATION

(11) **EP 1 635 083 A1**
(43) Date of publication of application: **15.03.2006**
(21) Application number: 04745886.4
(22) Date of filing: 14.06.2004
(51) Int. Cl.: F16F 9/50, F16F 9/18, B60G 21/06

(54) **HYDRAULIC SHOCK-ABSORBING DEVICE FOR MOTOR VEHICLE**

(30) Priority: 13.06.2003 JP 2003169420
(71) Applicant: YAMAHA HATSUDOKI KABUSHIKI KAISHA, Iwata-shi, Shizuoka 438-8501 (JP)
(72) Inventor: SAKAI, Kouji, c/o YAMAHA HATSUDOKI K.K., Iwata-shi Shizuoka 4388501 (JP); SAWAI, Seiji, c/o YAMAHA HATSUDOKI K.K., Iwata-shi, Shizuoka 4388501 (JP)
(74) Representative: Grünecker, Kinkeldey, Stockmair & Schwanhäusser Anwaltssozietät
(86) International application number: PCT/JP2004/008332
(87) International publication number: WO 2004/111488

(57) **Abstract**

A pair of damping hydraulic cylinders 2 and 3 are provided on a vehicle body. A first oil chamber 33 and a second oil chamber 38 are in communication with upper oil chambers 7 and 7 of the hydraulic cylinders 2 and 3. A bypass passage 65 (first through fourth working oil passages 35 and 62 - 64, a valve hole 61, a third oil chamber 49, first and second communication holes 52 and 53) for allowing communication between the oil chambers 33 and 38 is provided separately from both a first communication passage 42 and a second communication passage 43 of a second piston 28 having a throttle 41. An opening-closing valve 24 and a throttle 51 are provided in the bypass passage 65.

## Description

### [Technical Field]

This invention relates to a hydraulic damping system in which a damping force is relatively increased in case the operating directions of a pair of damping hydraulic cylinders on a motor vehicle, for example, are opposite to each other.

### [Background Art]

One conventional hydraulic damping system of this type is disclosed for example in JP-A-H8-132846. The hydraulic damping system disclosed in this publication has an intermediate unit connected to a pair of first hydraulic cylinder and a second hydraulic cylinder provided on a vehicle body.

This intermediate unit includes: a first pressure regulating cylinder having a first oil chamber in communication with an oil chamber of the first hydraulic cylinder, a second pressure regulating cylinder having a second oil chamber in communication with an oil chamber of the second hydraulic cylinder and in communication through a variable throttle with the first oil chamber, a free piston fit in both of the pressure regulating cylinders to form part of the walls of the first and second oil chambers, a high pressure gas chamber formed on the opposite side of the first and second oil chambers across the free piston, and others.
The free piston is formed such that changes in volume of the first and second oil chambers occurring as the free piston moves always keep a constant ratio.

With the conventional hydraulic damping system constituted as described above, in case the directions of motion of the first and second hydraulic cylinders are the same and the amounts of motion are the same, the free piston moves and the volumes of the first and second oil chambers increase or decrease such that their changes always keep a constant ratio. In this case, working oil does not flow through the variable throttle. On the other hand, in case directions of motion of the first and second hydraulic cylinders are opposite, the free piston is generally stationary and the working oil flows through the variable throttle. Therefore, in this case, the damping force relatively increases.

The variable throttle is made up of: check valves having a valve member constituted of a disk-shaped plate spring, and a spool valve interposed between the first oil chamber and the second oil chamber in parallel with the check valve. Two types of check valve are provided: one permitting oil flow from the first oil chamber to the second oil chamber, and the other permitting oil flow from the second oil chamber to the first oil chamber.

The spool valve is constituted such that a spool is pushed from one side with a resultant force of a pushing force produced with a solenoid and a resilient force of a first compression coil spring and also pushed from the other side with a resilient force of a second compression coil spring, and such that the working oil passage is opened or closed by switching between excited state and de-excited state to move the spool in the axial direction. With this spool valve, it is possible, by changing the amount of electric current supplied to the solenoid, to move the spool to a position where the resultant force of the force by the solenoid and the resilient force of the first compression spring, and the resilient force of the second compression spring are in balance, to regulate the cross-sectional area of the working oil flow passage. In other words, when energized, the spool moves to a position where the thrust of the solenoid and the reaction force of the balancing spring are in balance.

In other words, with the conventional hydraulic damping system, since resistance to the working oil flow is increased or decreased by changing the passage cross-sectional area of the variable throttle using the spool valve by changing the amount of electric current supplied to the solenoid, it is possible to change, from outside, the magnitude of the damping force produced by stroke speed difference between the first and second hydraulic cylinders.
Incidentally, the applicant was unable to discover an art literature related to the present invention other than those specified herein as related art literature information, before filing this application.

### [Disclosure of the Invention]

### [Problems to be Solved by the Invention]

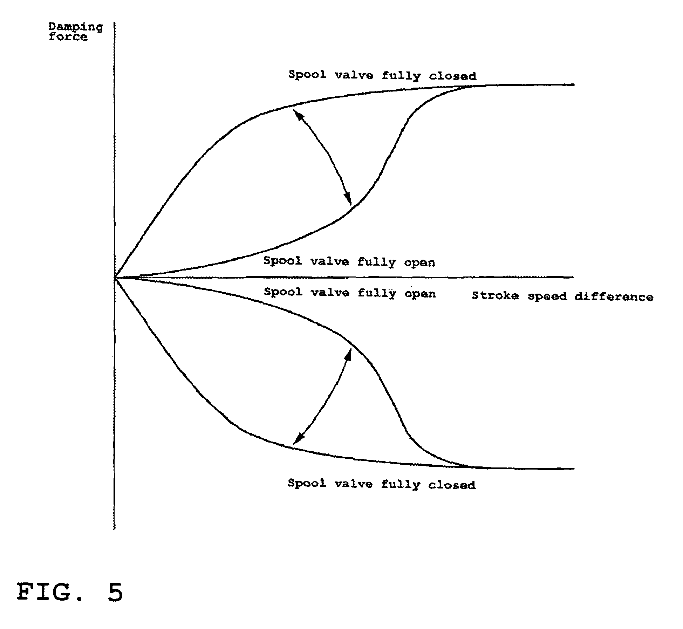

However, regulating the throttle aperture area only by the spool motion like with the conventional hydraulic damping system constituted as described above causes the passage resistance relative to the flow rate to rise like according to a quadratic function, so that the damping force comes to change according to only the so-called leak characteristic portion. Therefore, as shown in Fig. 5, while the damping force changes too sensitively in the operation range in which the stroke speed difference decreases, the damping force change does not easily change in the operation range in which the stroke speed difference increases. In particular, when the damping force is reduced with the spool valve open, as the stroke speed difference increases, the characteristic undesirably ends up in an S-curve type (see Fig. 5) in which the damping force increases suddenly, so that ride comfort and maneuver stability are adversely affected.
Also with the throttle constituted of the spool valve and the port, influence of the viscosity of the working oil on the passage resistance is likely to increase greatly, so that the rate of change in the damping characteristic due to working oil temperature increases.

The change in the variable throttle aperture area is caused by moving the spool to the position where the solenoid thrust is in balance with the reaction force of the balancing spring. Because of manufacture-related variations in the characteristics of the solenoid and the balancing spring, such as spool clearance, simply assembling the variable throttle does not result in the same aperture area even if the same amount of electric current is supplied. Therefore, the preload amount for the balancing spring must be adjusted while measuring the characteristics one by one after assembling the variable throttle. Moreover, the power source for supplying electric current to the solenoid must employ complicated circuitry for accurate control of the power source.

This invention is made to solve the above problems with an object of securely switching the damping force produced according to the stroke speed difference between damping hydraulic cylinders to an intended characteristic, from a range in which the speed difference is small to a range in which the speed difference is large, without requiring special components or adjustment work.

### [Means for Solving the Problems]

To accomplish the above object, this invention provides a hydraulic damping system for a vehicle, having first and second oil chambers in fluid communication with oil chambers of a pair of damping hydraulic cylinders provided on a vehicle body, the first and second oil chambers being constituted such that changes in volume of these oil chambers always keep a constant ratio, and being in fluid communication with each other through a variable throttle, in which the variable throttle is constituted with a plural number of fixed throttles provided parallel to each other between the first oil chamber and the second oil chamber, and with an opening-closing valve for opening and closing a working oil passage of at least one of these fixed throttles, the fixed throttles being formed by a plural number of check valves having a plate spring as their valve member and provided parallel to each other such that working oil flow through them in opposite directions to each other.

### [Effects of the Invention]

With this invention, the first oil chamber and the second oil chamber are in communication through at least one fixed throttle when the opening-closing valve is closed. As the opening-closing valve is opened, the first oil chamber and the second oil chamber come to be in mutual communication through a plural number of fixed throttles, resulting in a relatively small damping force. Therefore, the damping force can be increased or decreased by switching the opening-closing state of the opening-closing valve.

Therefore, the variable throttle is constituted by increasing or decreasing the number of the plate spring type fixed throttles being used, and so both the working oil passage area and the passage resistance can be made variable. Therefore, it is possible to securely switch the damping force produced according to the stroke speed difference between the pair of hydraulic cylinders to an intended characteristic, from a range in which the speed difference is small to a range in which the speed difference is large, without requiring special components or adjustment work.

With the plate spring type fixed throttle, in comparison with the throttle constituted with the spool valve and ports, the passage resistance is less influenced by the viscosity of working oil. Therefore, it is possible to reduce the rate of change in the damping force characteristic caused by the change in the temperature of working oil. Moreover, since the throttle characteristic does not depend on motions of moving parts because of absence of moving parts, stabilized valve characteristic can be obtained.
Since the so-called on-off type opening-closing valve can be used to open and close the working oil passage, accurate control can be performed using circuitry of about the level of simply turning electric current on and off, and so it is unnecessary to use a switching actuator of high accuracy.

With the invention of Claim 2, the electric current supplied to the solenoid has only to produce in the solenoid a force greater than the resilient force of the spring for pressing the valve member against the open end of the working oil passage, and need not be specially controlled. Therefore, it is easy to control the solenoid, and the solenoid used need not be of high accuracy.

### [Brief Description of Drawings]

Fig. 1 shows a hydraulic damping system of this invention.
Fig. 2 shows a section of an essential part of an intermediate unit in an enlarged scale.
Fig. 3 is a graph for explaining the characteristic of the hydraulic damping system of this invention.
Fig. 4 is another graph for explaining the characteristic of the hydraulic damping system of this invention.
Fig. 5 is a graph for explaining the characteristic of a conventional hydraulic damping system.

### [Best Mode for Carrying Out the Invention]

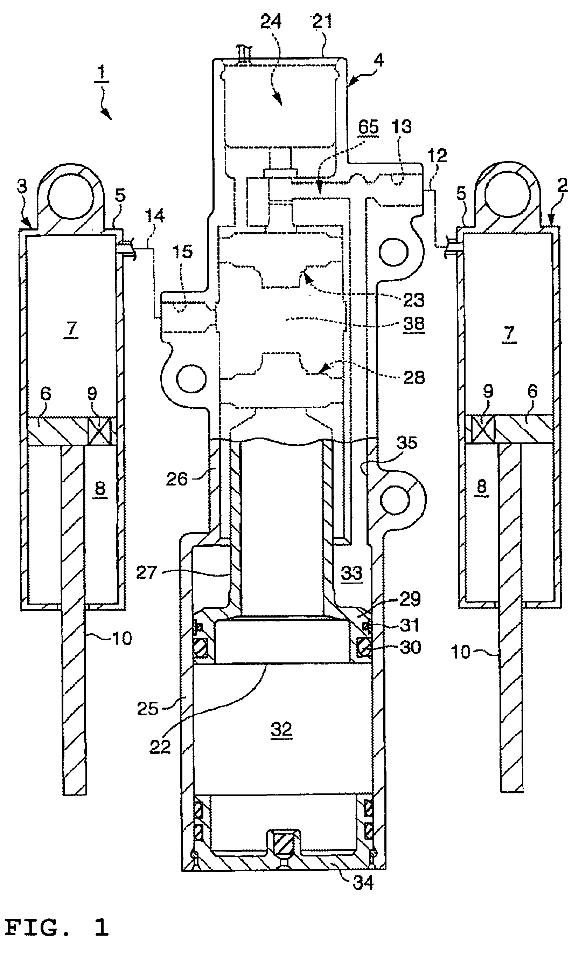

An embodiment of this invention is described in reference to Figs. 1 through 4.

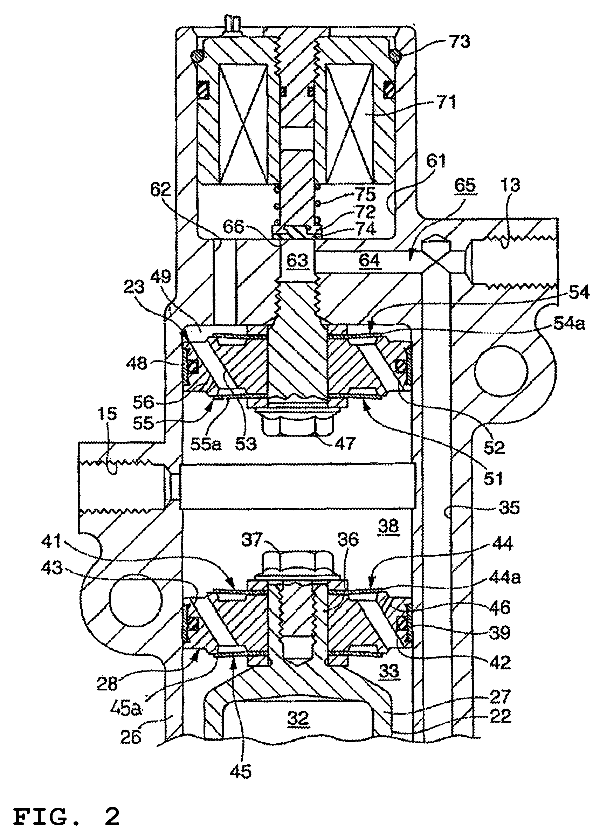

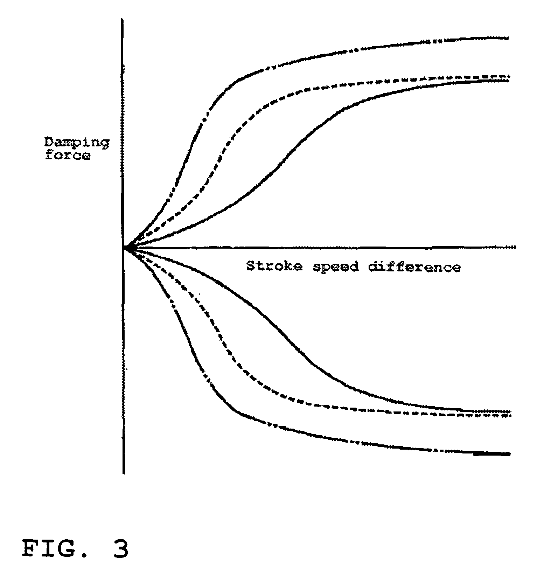

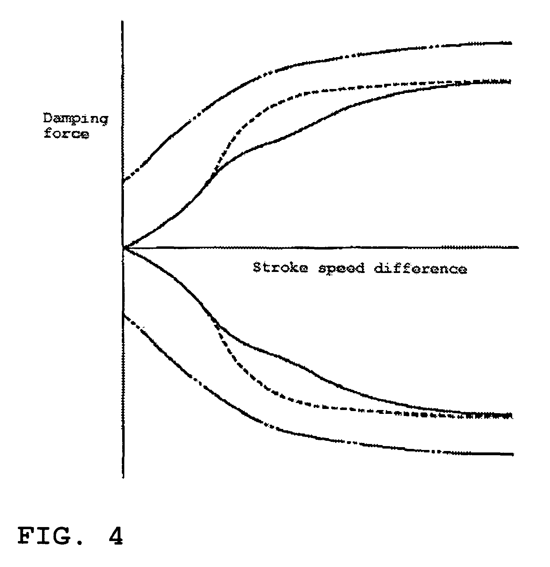

Fig. 1 shows a hydraulic damping system of this invention, showing its hydraulic cylinders and its intermediate unit partly in section. Fig. 2 shows a section of an essential part of the intermediate unit in an enlarged scale. Figs. 3 and 4 are graphs for explaining the characteristic of the hydraulic damping system of this invention.

In the drawings is shown a hydraulic damping system 1 of this embodiment. The hydraulic damping system includes: a pair of damping hydraulic cylinders 2 and 3 provided on a vehicle body (not shown), and an intermediate unit 4 connected to these hydraulic cylinders 2 and 3.
As for the two hydraulic cylinders 2 and 3, the interior of their cylinder body 5 is divided with a piston 6 into an upper oil chamber 7 and a lower oil chamber 8 and is filled with working oil. The piston 6 is provided with a throttle 9 for allowing fluid communication between the upper oil chamber 7 and the lower oil chamber 8.

The hydraulic cylinders 2 and 3 of this embodiment are interposed between the vehicle body side and the front wheel side, with the cylinder body 5 attached to the vehicle body of a motor vehicle while the lower end of a piston rod 10 pivoted on a part which moves up and down relative to the vehicle body, such as a link for front wheel suspension. The upper oil chamber 7 of the hydraulic cylinder 2 on the right side of the vehicle body (also on the right side in Fig. 1), out of these hydraulic cylinders 2 and 3, is connected through a hydraulic pipe 12 to a first piping connection port 13 of the intermediate unit 4 to be described later, while the other upper oil chamber 7 of the hydraulic cylinder 3 is connected through a hydraulic pipe 14 to a second piping connection port 15 of the intermediate unit 4.

As for the intermediate unit 4, as shown in Figs. 1 and 2, a free piston 22 to be described later, a partition wall 23, and an opening-closing valve 24 are provided within a housing 21. The housing 21 is formed with a first pressure regulating cylinder 25 relatively great in diameter on the lower end in Fig. 1, and a second pressure regulating cylinder 26 relatively small in diameter above the first pressure regulating cylinder 25.

The free piston 22 is made up of a first piston 27 formed to exhibit a bottomed cylindrical shape and a second piston 28 attached to the bottom (upper end in Figs. 1 and 2) of and located on the same axis as the first piston 27. The open side end of the first piston 27 is formed with an integral piston body 29 which is relatively great in diameter. The piston body 29 is provided with an 0-ring 30 and a seal ring 31 on its outside round surface, and fit to be freely movable in the first pressure regulating cylinder 25.

The interior of the first pressure regulating cylinder 25 is divided with the first piston 27 into a high pressure gas chamber 32 and a first oil chamber 33. The high pressure gas chamber 32 is isolated from the exterior of the cylinder with a lid member 34 fit to the opening on one end of the first pressure regulating cylinder 25 and filled with a high pressure N₂ gas.
The first oil chamber 33 is filled with working oil and in communication with the first piping connection port 13 through a first working oil passage 35 bored in one side portion of the housing 21 to extend parallel to the axis of the first pressure regulating cylinder 25.

The second piston 28 of the free piston 22, as shown in Fig. 2, is secured using a fixing bolt 37 to a post 36 provided to project from the bottom of the first piston 27, and fit for free motion in the second pressure regulating cylinder 26 to divide the interior of the second pressure regulating cylinder 26 into the first oil chamber 33 located in the lower part of the same drawing and a second oil chamber 38. The second piston 28 of this embodiment is formed in a disk shape, and provided with a seal ring 39 on its outside round surface. The second piston 28 is also provided with a throttle 41 for allowing fluid communication between the first oil chamber 33 and the second oil chamber 38.

The throttle 41 is what is called in this invention a fixed throttle, and includes: a first communication passage 42 and a second communication passage 43 bored through the second piston 28, and check valves 44 and 45 provided in the way of these passages 42 and 43. The check valves 44 and 45 include valve members 44a and 45a of plate springs formed in a disk shape. The open ends of the first communication passage 42 and the second communication passage 43 are opened and closed with the valve members 44a and 45a. The axial center parts of the valve members 44a and 45a are fit on the post 36 of the first piston 27, and secured to the first piston 27 together with the second piston 28 using the fixing bolt 37.

The check valve 44 provided in the first communication passage 42 is formed to permit flow of working oil only from the first oil chamber 33 to the second oil chamber 38, and the check valve 45 provided in the second communication passage 43 is formed to permit flow of working oil only from the second oil chamber 38 to the first oil chamber 33. In the middle of the first communication passage 42 is provided an orifice 46 of a relatively small diameter for allowing fluid communication between the communication passage 42 and the second oil chamber 38.
The second oil chamber 38 is formed between the second piston 28 and the partition wall 23 located above the second piston 28 in Fig. 2, and filled with working oil. The second oil chamber 38 is also in fluid communication with the second piping connection port 15 bored in one side portion of the housing 21.

6 As shown in Fig. 2, the partition wall 23 defining the second oil chamber 38 in cooperation with the second piston 28 is formed in a disk shape, fit inside the second pressure regulating cylinder 26, and secured to the housing 21 by means of a fixing bolt 47. The outside round surface of the partition wall 23 is also provided with a seal ring 48 to seal the space between the partition wall 23 and the inside circumference of the second pressure regulating cylinder 26.
Further, the partition wall 23 is provided in the housing 21 to divide the interior of the second pressure regulating cylinder 26 into the second oil chamber 38 and a third oil chamber 49, and is provided with a throttle 51 to allow fluid communication between the second oil chamber 38 and the third oil chamber 49.

The throttle 51 is what is called in this invention a fixed throttle, which is the same in constitution as the throttle 41 provided in the second piston 28, and includes: a first communication passage 52 and a second communication passage 53 bored through the partition wall 23, and check valves 54 and 55 provided in the way of these passages 52 and 53. The check valves 54 and 55 include valve members 54a and 55a of plate springs in a disk shape to open and close the open ends of the first communication passage 52 and the second communication passage 53. The axial center parts of the valve members 54a and 55a are fit on the fixing bolt 47 and secured to the housing 21 together with the partition wall 23.

The check valve 54 provided in the first communication passage 52 is formed to permit flow of working oil only from the second oil chamber 38 to the third oil chamber 49, and the check valve 55 provided in the second communication passage 53 is formed to permit flow of working oil only from the third oil chamber 49 to the second oil chamber 38. In the middle of the second communication passage 53 is formed an orifice 56 of a relatively small diameter to allow fluid communication between the interior of the communication passage 53 and the second oil chamber 38. The throttle 51 and the throttle 41 constitute what are called a plural number of fixed throttles in this invention.

The third oil chamber 49 is in fluid communication with the interior of a valve hole 61 formed on one side (upper side in Fig. 2) of the housing 21 through a second working oil passage 62. The valve hole 61 is in fluid communication with the first working oil passage 35 through a third working oil passage 63 and a fourth working oil passage 64 formed in the housing 21 between the valve hole 61 and the second pressure regulating cylinder 26. The third oil chamber 49, the valve hole 61, and the second through fourth working oil passages 62 through 64 are also filled with working oil. A bypass passage 65 of this invention is made up of these second through fourth working oil passages 62 through 64, the interior of the valve hole 61, and the first and second communication passages 52 and 53 of the partition wall 23. In other words, the throttle 51 of the partition wall 23 is provided in the way of the bypass passage 65.

The third working oil passage 63 is formed to be located coaxially with the second pressure regulating cylinder 26, with its one end opening to the interior of the valve hole 61 to be opened and closed with the opening-closing valve 24 provided within the valve hole 61. The opening is indicated with symbol 66 in Fig. 2.
The opening-closing valve 24 is of a constitution in which a valve body 72 is moved back and forth relative to the opening 66 with a solenoid 71 serving as a power source to open and close the opening 66, fit within the valve hole 61 and secured with a snap ring 73 so as not to come off. The valve member 72, with a rubber plate 74 fixed to its fore-end facing the opening 66, is urged with a compression coil spring 75 in the closing direction.

The opening-closing valve 24 opens as the solenoid 71 is energized and excited and the valve member 72 is pulled up in Fig. 2 against the resilient force of the compression coil spring 75, and closes as the solenoid is de-energized and the valve member 72 moves down in Fig. 2 with the resilient force of the compression coil spring 75. The solenoid 71 may be switched between energized state and de-energized state with a switch (not shown) operated by an operator, or automatically according to conditions, for example.
The plural number of fixed throttles 41 and 51, and the opening-closing valve 24 for opening and closing the working oil passage of the fixed throttle 51 constitute what is called a variable throttle in this invention.

In the hydraulic damping system 1 including the intermediate unit 4 constituted as described above, in case for example the left and right hydraulic cylinders 2 and 3 move by the same motion amount in the same direction, since the oil pressure in the first oil chamber 33 of the first pressure regulating cylinder 25 and the oil pressure in the second oil chamber 38 of the second pressure regulating cylinder 26 are maintained generally the same, the check valves 44, 45, 54, and 55 provided in the free piston 22 and the partition wall 23 remain in closed state. As a result, in this case, the free piston 22 moves in vertical directions in Figs. 1 and 2, and damping force is produced only with the throttles 9 of both the hydraulic cylinders 2 and 3.

In case the left and right hydraulic cylinders 2 and 3 move in opposite directions to each other, a difference is produced between the oil pressure in the first oil chamber 33 and the oil pressure in the second oil chamber 38. Here, first, motions for a case in which the opening-closing valve 24 is closed are described. With the opening-closing valve 24 closed, since working oil cannot flow into or out of the third oil chamber 49, the throttle 51 provided in the partition wall 23 does not function. In case a difference is produced between the oil pressure in the first oil chamber 33 and the oil pressure in the second oil chamber 38 as the left and right hydraulic cylinders 2 and 3 move in opposite directions with the opening-closing valve 24 closed, working oil flows through the throttle 41 of the second piston 28 so as to offset the pressure difference between the two oil chambers.

For example, in case the hydraulic cylinder 2 on the right side of the vehicle body is compressed and the hydraulic cylinder 3 on the left side of the vehicle body is expanded, the oil pressure in the first oil chamber 33 becomes higher than the oil pressure in the second oil chamber 38. At this time, oil pressure works on the check valve 44 of the first communication passage 42, out of the two communication passages 42 and 43 formed in the second piston 28, to push and open the check valve 44. When the oil pressure is greater than the resilient force of the check valve 44, the check valve 44 opens and working oil flows through the first communication passage 42 from the first oil chamber 33 into the second oil chamber 38. In other words, working oil comes to flow through the throttle 41 of the second piston 28.

As working oil flows through the throttle 41 of the second piston 28 as described above, damping force is produced in the intermediate unit 4 in addition to both the throttles 9 and 9 of the hydraulic cylinders 2 and 3. In case the banking direction of the vehicle body is opposite the above description, damping force is produced as the check valve 45 provided in the way of the second communication passage 43 opens and working oil flows through the second communication passage 43 from the second oil chamber 38 into the first oil chamber 33.

When the opening-closing valve 24 is open, the first oil chamber 33 and the third oil chamber 49 are in fluid communication with each other through the first through fourth working oil passages 35, 62 - 64, and through the interior of the valve hole 61. In this state, oil pressure applied to the first piping connection port 13 is generally equally transmitted to both the first oil chamber 33 and the third oil chamber 49. As a result, in case the left and right hydraulic cylinders 2 and 3 move in opposite directions to each other, working oil comes to flow through the throttle 41 of the second piston 28 and the throttle 51 of the partition wall 23 so that the pressure difference is offset between the first and third oil chambers 33 and 49, and the second oil chamber 38.

For example, in case the oil pressure in the first and third oil chambers 33 and 49 becomes higher than the oil pressure in the second oil chamber 38, the check valve 44 of the first communication passage 42 of the second piston 28 opens and working oil flows from the first oil chamber 33 into the second oil chamber 38, while the check valve 55 of the second communication passage 53 of the partition wall 23 opens and working oil flows from the third oil chamber 49 into the second oil chamber 38. In other words, with the opening-closing valve 24 being open, since working oil flows respectively through the two throttles 41 and 51, damping force becomes relatively small in comparison with the case in which the opening-closing valve 24 is closed. Incidentally, resistance produced when working oil flows is set to be greater through the throttle 51 than through the throttle 41.

Therefore, the hydraulic damping system 1 provided with this intermediate unit 4 is capable of increasing and decreasing damping force by switching the opened-closed state of the opening-closing valve 24. In other words, with the hydraulic damping system 1, since the variable throttle is constituted by increasing and decreasing the number of the plate spring type fixed throttles 41 and 51 being used, both the opening area of the working oil passage and the passage resistance can be made variable.
Moreover, with the plate spring type fixed throttles 41 and 51, in comparison with throttles constituted with spool valve and port, the passage resistance is less affected with the viscosity of working oil. Further, the throttling area has no moving parts, so that the throttle characteristic does not depend on motions of moving parts. In other words, stabilized valve characteristic can be obtained by dimension control for every component.

Since the so-called on-off type opening-closing valve 24 can be used to open and close the working oil passage, the valve need not be of specially high accuracy and so accurate control can be performed using circuitry of about the functional level of simply turning on and off electric current. In particular, since the electric current applied to the solenoid 71 has only to produce in the solenoid 71 a thrust that is greater than the resilient force of the compression coil spring 75 for pressing the valve member (plate 74) against the opening 66 of the working oil passage, there is no need of controlling the current in particular.
Since the second piston 28 and the partition wall 23 of this embodiment may be the same as each other in both shape and dimension, constituting in this way makes it possible to cut down on manufacturing cost by the common use of components.

The damping force produced with the intermediate unit 4, as shown in Fig. 3, varies with the stroke speed difference of the left and right hydraulic cylinders 2 and 3 (difference in oil pressure between the first and third oil chambers 33 and 49, and the second oil chamber 38).
Fig. 3 shows the relationship between the stroke speed difference and the damping force. In the figure, the solid lines represent changes in the damping force in the state where the opening-closing valve 24 is open; the broken lines in the state where the opening-closing valve 24 is closed; and the dash-and-double-dotted lines on the assumption that working oil flows only through the throttle 51 of the partition wall 23.

As seen from Fig. 3, with the hydraulic damping system 1 provided with the intermediate unit 4, it is possible to choose and use one of the two types of damping force characteristics by changing the opening-closing state of the opening-closing valve 24. Incidentally, the opening-closing valve 24 is closed when high damping forces are required as when driving at high speeds or on winding roads, and opened when soft ride is desired.

In the intermediate unit 4 of the above embodiment, both the second piston 28 and the partition wall 23 are respectively provided with the orifices 46 and 55. However, it is possible not to form an orifice in the partition wall 23. In case such a constitution is employed, the relationship between the stroke speed difference and the damping force becomes as shown in Fig. 4. In that case, the damping force is relatively great when the stroke speed difference is relatively small.
Further, the opening-closing valve 24, besides employing the constitution in which the valve member 72 is driven with the solenoid 71, may employ a constitution in which the valve is driven with an electric motor (not shown), or opened and closed manually.

Further, while the above embodiment shows an example in which the intermediate unit 4 is connected to the left and right hydraulic cylinders 2 and 3 of the front wheel suspension system, it is possible to connect the intermediate unit 4 to left and right hydraulic cylinders of a rear wheel suspension system, or to a pair of hydraulic cylinders provided in front and rear of the vehicle body. It is also possible to connect the intermediate unit 4 to a hydraulic cylinder of the front suspension system on one of the left and right sides and to a hydraulic cylinder of the rear suspension system on the other of the left and right sides. Furthermore, it is possible to arrange the hydraulic cylinders 2 and 3 so that the cylinder body 5 is pivoted on the wheel side while the piston rod 10 is pivoted on the vehicle body side.

### [Industrial Applicability]

The hydraulic damping system for a vehicle of this invention is useful when used in the suspension system of passenger cars.

## Claims

1. A hydraulic damping system for a vehicle, having first and second oil chambers in fluid communication with oil chambers of a pair of damping hydraulic cylinders provided on a vehicle body, the first and second oil chambers being constituted such that changes in volume of these oil chambers always keep a constant ratio, and being in fluid communication with each other through a variable throttle, **characterized in that** the variable throttle includes: a plural number of fixed throttles provided parallel to each other between the first oil chamber and the second oil chamber; and an opening-closing valve for opening and closing a working oil passage of at least one of these fixed throttles; and each of the fixed throttles is formed by a plural number of check valves each having a plate spring as their valve member, the plural number of check valves being disposed in parallal with each other such that working oil flows through them in opposite directions to each other.

2. The hydraulic damping system for a vehicle of Claim 1, wherein the opening-closing valve comprises: a valve member which can reciprocate between a closing position for closing an open end of the working oil passage and an opening position axially spaced from the open end, a spring for pressing the valve member against the open end, and a solenoid for moving the valve member to the open end against a resilient force of the spring.
